# EUROPÄISCHE PATENTSCHRIFT

(11) **EP 0 371 292 B1**
(45) Veröffentlichungstag und Bekanntmachung des Hinweises auf die Patenterteilung: **15.09.1993**
(21) Anmeldenummer: 89120752.4
(22) Anmeldetag: 09.11.1989
(51) Int. Cl.: B25B 11/02, B23K 37/04

(54) **Vorrichtung zur Positionierung eines Werkstückes**
Device for positioning a work piece
Dispositif pour le positionnement d'une pièce à usiner

(30) Priorität: 19.11.1988 DE 8814452 U
(43) Veröffentlichungstag der Anmeldung: 06.06.1990
(73) Patentinhaber: Schmidt, Hans-Adolf, D-56470 Bad Marienberg (DE)
(72) Erfinder: Schmidt, Hans-Adolf, D-56470 Bad Marienberg (DE)
(74) Vertreter: Kossobutzki, Walter, Dipl.-Ing.(FH)

(56) Entgegenhaltungen:
- DE-C- 3 211 224
- DE-U- 8 613 677
- GB-A- 364 894
- SU-A- 927 472
- SU-A- 1 386 413
- US-A- 1 865 916
- US-A- 1 875 761
- US-A- 2 646 101

## Beschreibung

Die Erfindung bezieht sich auf eine Vorrichtung zur Positionierung eines Werkstückes, insbesondere eines plattenartigen, abgewinkelten Dach- oder Fassadenelementes für Schweiß- und/oder Schleifarbeiten, bestehend aus einem rechteckigen, metallischen Grundrahmen mit Spannelementen für das Werkstück.

Zur Verkleidung von Dächern oder Fassaden werden Elemente verwendet, die aus einer meist mehrfach abgewinkelten Blechtafel bestehen. Der seitliche Rand einer solchen Blechtafel ist abgekantet, wobei die Abkantungen im Bereich der Abwinklungen auf Gehrung geschnitten sind und miteinander verschweißt werden. Um sicherzustellen, daß das Dach- oder Fassadenelement bei seiner Schweißung eine vorgegebene, bei mehreren gleichen Dach- oder Fassadenelementen stets genau die gleiche Winkellage annimmt, wird dasselbe auf einem rechteckigen, metallischen Grundrahmen mittels Spannelementen gesichert. Da der Grundrahmen nur eine Ebene besitzt, müssen die Dach- oder Fassadenelemente meist nach jedem Schweißvorgang gelöst und in der nächsten Winkellage wieder genau eingespannt werden. Dies ist umständlich und zeitraubend. Trotz des damit verbundenen Aufwandes kann es immer wieder vorkommen, daß zwischen den einzelnen Dach- oder Fassadenelementen geringfügige Unterschiede bestehen, die sich insbesondere bei der späteren Montage nachteilig bemerkbar machen.

Der Erfindung liegt deshalb die Aufgabe zugrunde, eine Vorrichtung zur Positionierung eines Werkstückes, insbesondere eines plattenartigen, abgewinkelten Dach- oder Fassadenelementes für Schweiß- und/oder Schleifarbeiten zu schaffen, die ohne großen Aufwand sicherstellt, daß alle Dach- oder Fassadenelemente einer Type keinerlei Abweichungen untereinander aufweisen und daß alle Schweißnähte eines Dach- oder Fassadenelementes ohne neue Positionierung desselben hergestellt werden können. Gleiches gilt auch für die nachträgliche Bearbeitung der Schweißnähte durch einen Schleifvorgang.

Zur Lösung dieser Aufgabe wird gemäß der Erfindung bei einer Vorrichtung der eingangs beschriebenen Gattung vorgeschlagen, daß an zwei sich gegenüberliegenden Seiten auf dem Grundrahmen jeweils zwei mit Abstand voneinander angeordnete, schwenkbare Träger verschiebbar gelagert sind, daß die Träger an ihren freien Enden jeweils einen schwenkbaren und verschiebbaren Arm aufnehmen und daß zumindest jeder Träger mit mindestens einem Spannelement bestückt ist.

Durch eine derartig ausgebildete Vorrichtung kann ein bis maximal viermal abgewinkeltes Dach- oder Fassadenelement mit seitlichen Abkantungen in die genaue, für den Schweißvorgang erforderliche Position gebracht werden und ohne zusätzliches Umrüsten geschweißt und geschliffen werden. Dabei kann die Vorrichtung in einfacher Weise den unterschiedlichen Breiten und den unterschiedlich angeordneten und ausgebildeten Abwinklungen angepaßt werden.

Weitere Merkmale einer Vorrichtung gemäß der Erfindung sind in den Ansprüchen 2 - 13 offenbart.

Die Erfindung wird nachfolgend anhand eines in einer Zeichnung dargestellten Ausführungsbeispieles näher erläutert. Dabei zeigen
- Fig. 1: eine Aufrißdarstellung einer Vorrichtung gemäß der Erfindung und
- Fig. 2: eine Seitenansicht des unteren Bereiches der Vorrichtung der Fig. 1.

Die in der Zeichnung dargestellte Vorrichtung dient zur Positionierung einer nur angedeuteten Fassadenplatte 1, die, wie die Zeichnung erkennen läßt, eine unterschiedliche Größe oder Form aufweisen kann. Diese Fassadenplatte 1 besteht aus einer rechteckigen Blechtafel, beispielsweise aus Aluminium, die über ihre Länge vier unterschiedlichen Winkel aufweisende Abwinklungen 2 besitzen kann. An ihren beiden Längsseiten besitzt das Fassadenelement 1 Abkantungen 3, die an ihren Enden auf Gehrung geschnitten sind und im Bereich der Abwinklungen 2 miteinander verschweißt werden.

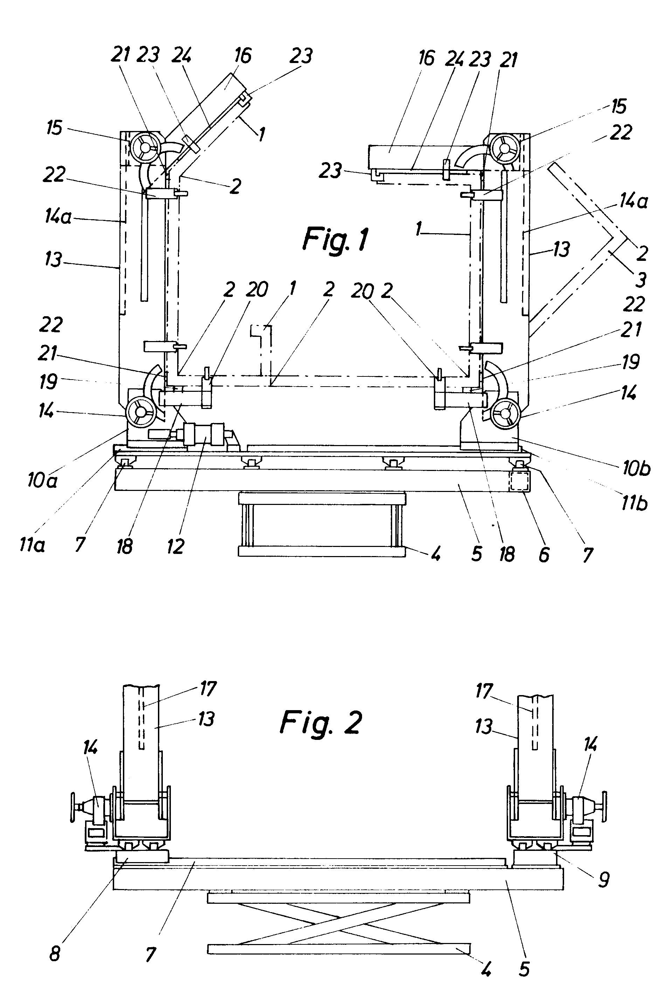

Die Vorrichtung zur Aufnahme des Fassadenelementes 1 besteht aus einem Hubtisch 4, der beispielsweise als Scherenhubtisch ausgebildet ist. Dieser Hubtisch 4 nimmt an seiner oberen Fläche einen Grundrahmen 5 auf, der aus metallischen Hohlprofilen 6 zusammengeschweißt ist. Wie die Fig. 1 erkennen läßt, ist auf jedem sich senkrecht zur Zeichnungsebene erstreckenden Hohlprofil 6 eine Führungsleiste 7 befestigt. Alle Führungsleisten 7 nehmen in diesem Ausführungsbeispiel eine quer über denselben angeordnete Führungsschiene 8 auf, die von Hand auf den Führungsleisten 7 verschiebbar und ihrer jeweiligen Lage an den Führungsleisten 7 bzw. dem Grundrahmen 5 feststell- bzw. festklemmbar ist. Im dargestellten Ausführungsbeispiel (Fig. 2) enden die Führungsleisten 7 mit Abstand von einer Seitenkante des Grundrahmens 5. Hier nimmt der Grundrahmen 5 eine ortsfeste Führungsschiene 9 auf. Dabei ist es in Abänderung dieses Ausführungsbeispieles auch möglich, die Führungsleisten 7 bis zur seitlichen Kante des Grundrahmens 5 zu verlängern und die Führungsschiene 9 ebenfalls auf den Führungsleisten 7 verschiebbar und festklemm- bzw. feststellbar anzuordnen. Nach dem Lösen der entsprechenden Festklemm- bzw. Feststellmittel können die Führungsschienen 8,9 gegeneinander verschoben werden, wobei im dargestellten Ausführungsbeispiel nur eine Verschiebung der Führungsschiene 8 möglich ist.

Jede Führungsschiene 8,9 nimmt zwei gleich ausgebildete und spiegelbildlich zueinander angeordnete Schlitten 10a, 10b auf. Dabei ist der Schlitten 10a auf einem verhältnismäßig kurzen Führungsteil 11a der Führungsschiene 8 gehalten und kann durch eine beispielsweise pneumatisch beaufschlagbare Kolben-Zylinder-Einheit 12 auf dem Führungsteil 11a verschoben werden. Der Schlitten 10b ist auf einem längeren Führungsteil 11b der Führungsschiene 8,9 gehalten und beispielsweise durch Klemmung gesichert. Dieser Schlitten 10b ist nach dem Lösen der Klemmung von Hand auf dem Führungsteil 11b verschiebbar.

Auf jedem Schlitten 10a,10b ist ein aus einem Hohlprofil gebildeter Träger 13 schwenkbar gelagert, der einen Schwenkwinkel von mindestens 90 Grad und höchstens 180 Grad besitzt. Vorzugsweise ist jedem Träger 13 ein an sich bekannter, nicht näher dargestellter, als Schneckengetriebe ausgebildeter Antrieb 14 zugeordnet, über die die Träger 13 in ihre jeweils benötigte Arbeitslage geschwenkt werden können. Der Schwenkantrieb 14 ist entweder manuell oder über einen Motor betätigbar.

In den als Hohlprofil ausgebildeten Trägern 13 ist auf einer nur angedeuteten Führung 14 jeweils ein Schlitten 15 verschiebbar, der jeweils einen schwenkbar gelagerten Arm 16 trägt. Auch die Arme 16 sind um einen Winkel von mindestens 90 Grad und höchstens 180 Grad am Schlitten 15 schwenkbar. Die Schwenkbewegung kann hier ebenfalls von Hand oder über einen Motor erfolgen. In der jeweiligen Schwenklage sind die Arme 16 durch an sich bekannte Mittel feststell- bzw. festklemmbar. Die Arme 16 sind beispielsweise als verhältnismäßig schmale Leisten ausgebildet, die durch einen Längsschlitz 17 in den Trägern 13 herausragen.

Jeder Schlitten 10a,10b weist einen Kragarm 18 auf, an dem einerseits ein Anschlag 19 und andererseits ein beispielsweise pneumatisch beaufschlagbares Spannelement 20 befestigt ist. Auch jeder Träger 13 besitzt zwei derartige Anschläge 21 und Spannelemente 22. Im dargestellten Ausführungsbeispiel besitzen die Arme 16 keine Spannelemente. Hier sind nasenartige Vorsprünge 23 vorgesehen, die jeweils die End- und Seitenbereiche des Fassadenelementes 1 sichern. Zur besseren Einstellung sind allen Schlitten 10a,10b,15 sowie den Trägern 13 und den Armen 16 Maßskalen zugeordnet, die eine Grundeinstellung der Vorrichtung erleichtern. In eine solche voreingestellte Vorrichtung wird nun das vorgebogene Fassadenelement 1 seitlich oder von oben eingesetzt und an den Anschlägen 19,21 und einer Platte 24 der Arme 16 zum Anliegen gebracht. In dieser vorgegebenen Stellung wird nun das Fassadenelement 1 mittels der Spannelemente 20, 22 festgespannt. In dieser Einspannstellung werden alle Schweißnähte an den Abkantungen 3 im Bereich der Abwinklungen 2 gemacht und anschließend durch einen Schleifvorgang gesäubert. Danach werden die Spannelemente 20,22 gelöst und das bearbeitete Fassadenelement 1 wird durch ein anderes zu bearbeitendes Fassadenelement 1 ersetzt.

## Patentansprüche

1. Vorrichtung zur Positionierung eines Werkstückes, insbesondere eines plattenartigen, abgewinkelten Dach- oder Fassaden elementes (1) für Schweiß- und/oder Schleifarbeiten, bestehend aus einem rechteckigen, metallischen Grundrahmen (5) mit Spannelementen für das Werkstück,
dadurch gekennzeichnet,
daß an zwei sich gegenüberliegenden Seiten auf dem Grundrahmen (5) jeweils zwei mit Abstand voneinander angeordnete, schwenkbare Träger (13) verschiebbar gelagert sind, daß die Träger (13) an ihren freien Enden jeweils einen schwenkbaren und verschiebbaren Arm (16) aufnehmen und daß zumindest jeder Träger (13) mit mindestens einem Spannelement (20) bestückt ist.

2. Vorrichtung nach Anspruch 1,
dadurch gekennzeichnet,
daß die Träger (13) und/oder die Arme (16) als Hohlprofile ausgebildet sind.

3. Vorrichtung nach Anspruch 1 oder 2,
dadurch gekennzeichnet,
daß zumindest die an einer Seite des Grundrahmens (5) angeordneten Träger (13) jeweils auf einem verschiebbaren Schlitten (10a,10b) angeordnet sind.

4. Vorrichtung nach Anspruch 3,
dadurch gekennzeichnet,
daß zumindest einem Schlitten (10a,10b) ein Verschiebeantrieb (12) zugeordnet ist.

5. Vorrichtung nach Anspruch 3 oder 4,
dadurch gekennzeichnet,
daß die sich einander gegenüberliegenden Träger (13) auf einer auf dem Grundrahmen (5) verschiebbaren Führungsschiene (8) gehalten sind.

6. Vorrichtung nach Anspruch 5,
dadurch gekennzeichnet,
daß der Führungsschiene (8) ein Verschiebeantrieb zugeordnet ist.

7. Vorrichtung nach mindestens einem der Ansprüche 1 - 6,
dadurch gekennzeichnet,
daß jedem Träger (13) ein Schwenkantrieb (14) zugeordnet ist.

8. Vorrichtung nach mindestens einem der Ansprüche 1 - 7,
dadurch gekennzeichnet,
daß jeder Arm (16) über einen Schlitten (15) am Träger (13) geführt ist.

9. Vorrichtung nach Anspruch 8,
dadurch gekennzeichnet,
daß dem Schlitten (15) ein Verschiebeantrieb zugeordnet ist.

10. Vorrichtung nach Anspruch 8 und/oder 9,
dadurch gekennzeichnet,
daß jedem Arm (16) ein Schwenkantrieb zugeordnet ist.

11. Vorrichtung nach mindestens einem der Ansprüche 8 - 10,
dadurch gekennzeichnet,
daß jeder Arm (16) mit mindestens einem Spannelement ausgerüstet ist.

12. Vorrichtung nach mindestens einem der Ansprüche 1 - 11,
dadurch gekennzeichnet,
daß jeder Träger (13) und jeder Arm (16) um mindestens einen Winkel von 90 Grad schwenkbar ausgebildet ist.

13. Vorrichtung nach mindestens einem der Ansprüche 1 - 12,
dadurch gekennzeichnet,
daß jeder Führungsschiene (8), jedem Schlitten (10a,10b,15), jedem Träger (13) und/oder jedem Arm (16) eine Feststelleinrichtung zugeordnet ist.

## Claims

1. Device for positioning a workpiece, in particular a plate-like, angular roof or facade element (1) for welding and/or grinding, consisting of a rectangular metal base frame (5) with clamping elements for the workpiece, characterised in that two swivelling supports (13) arranged at a distance from one another are displaceably mounted on two opposing sides of the base frame (5), that the supports (13) each receive a swivelling and displaceable arm (16) at their free ends and that at least each support (13) is provided with at least one clamping element (20).

2. Device according to claim 1, characterised in that the supports (13) and/or the arms (16) are designed as hollow profile sections.

3. Device according to claim 1 or claim 2, characterised in that at least the support (13) arranged on one side of the base frame (5) is arranged on a displaceable slide (10a, 10b).

4. Device according to claim 3, characterised in that a sliding gear drive (12) is associated with at least one slide (10a, 10b).

5. Device according to claim 3 or claim 4, characterised in that the opposing supports (13) are held on a guide rail (8) displaceable on the base frame (5).

6. Device according to claim 5, characterised in that a sliding gear drive is associated with the guide rail (8).

7. Device according to at least one of claims 1 - 6, characterised in that a swivel drive (14) is associated with each support (13).

8. Device according to at least one of claims 1 - 7, characterised in that each arm (16) is guided on the support (13) via a slide (15).

9. Device according to claim 8, characterised in that a sliding gear drive is associated with the slide (15).

10. Device according to claim 8 and/or claim 9, characterised in that a swivel drive is associated with each arm (16).

11. Device according to at least one of claims 8 - 10, characterised in that each arm (16) is provided with at least one clamping element.

12. Device according to at least one of claims 1 - 11, characterised in that each support (13) and each arm (16) is designed to swivel by at least an angle of 90°.

13. Device according to at least one of claims 1 - 12, characterised in that a locking device is associated with each guide rail (8), each slide (10a, 10b, 15), each support (13) and/or each arm (16).

## Revendications

1. Dispositif de positionnement d'une pièce, en particulier d'un élément coudé en forme de plaque (1) de toit ou de façade pour les travaux de soudage et/ou de polissage, se composant d'un châssis rectangulaire metallique de base (5) comportant des élément de serrage de la pièce, caractérisé en ce que deux supports pivotant (13) placés à distance l'un de l'autre sont montés déplaçables sur deux côtés opposés du châssis de base (5), en ce que l'extrémité libre de chaque support (13) supporte un bras pivotant et déplaçable (16) et en ce qu'au moins chaque support (13) est équipé d'au moins un élément de serrage (20).

2. Dispositif selon la revendication 1, caractérisé en ce que les supports (13) et/ou les bras (16) sont conformés en profilés creux.

3. Dispositif selon la revendication 1 ou 2, caractérisé en ce qu'au moins chacun des supports (13) disposé sur un côté du châssis de base (5) est disposé sur un chariot déplaçable (10a, 10b).

4. Dispositif selon la revendication 3, caractérisé en ce qu'une commande de déplacement (12) est affectée à au moins un chariot (10a, 10b).

5. Dispositif selon la revendication 3 ou 4, carctérisé en ce que les supports (13) opposés l'un à l'autre sont tenus sur une barre de guidage (8) déplaçable sur le châssis de base (5).

6. Dispositif selon la revendication 5, caractérisé en ce qu'une commande de déplacement est affectée à la barre de guidage (8).

7. Dispositif selon au moins l'une des revendications 1 à 6, caractérisé en ce qu'une commande de pivotement (14) est affectée à chaque support (13).

8. Dispositif selon au moins l'une des revendications 1 à 7, caractérisé en ce que chaque bras (16) est guidé par un chariot (15) sur le support (13).

9. Dispositif selon la revendication 8, caractérisé en ce qu'une commande de déplacement est affectée au chariot (15).

10. Dispositif selon la revendication 8 et/ou 9, caractérisé en ce qu'une commande de pivotement est affectée à chaque bras (16).

11. Dispositif selon au moins l'une des revendications 8 à 10, caractérisé en ce que chaque bras (16) est équipé d'au moins un élément de serrage.

12. Dispositif selon au moins l'une des revendications 1 à 11, caractérisé en ce que chaque support (13) et chaque bras (16) est conçu pour être pivotant sur au moins un angle de 90 degrés.

13. Dispositif selon l'une au moins des revendications 1 à 12, caractérisé en ce qu'un dispositif d'immobilisation est affecté à chaque barre de guidage (8), à chaque chariot (10a, 10b, 15), à chaque support (13) et/ou à chaque bras (16).
